# EUROPEAN PATENT APPLICATION

(11) **EP 4 339 163 A1**
(43) Date of publication of application: **20.03.2024**
(21) Application number: 23175150.4
(22) Date of filing: 24.05.2023
(51) Int. Cl.: C01G 53/00, H01M 4/00

(54) **POSITIVE ACTIVE MATERIAL FOR RECHARGEABLE LITHIUM BATTERY, PREPARING METHOD THEREOF, AND RECHARGEABLE LITHIUM BATTERY INCLUDING THE SAME**

(30) Priority: 19.08.2022 KR 20220104216
(71) Applicant: Samsung SDI Co., Ltd., Yongin-si, Gyeonggi-do 17084 (KR)
(72) Inventor: JANG, Jungsue, 17084 Yongin-si (KR); CHANG, Donggyu, 17084 Yongin-si (KR); KIM, Jinyoung, 17084 Yongin-si (KR); SHIM, Jaeha, 17084 Yongin-si (KR); KANG, Taegeun, 17084 Yongin-si (KR)
(74) Representative: Marks & Clerk LLP

(57) **Abstract**

Disclosed a positive active material for a rechargeable lithium battery, a preparing method thereof, and a rechargeable lithium battery including the same, the positive active material for a rechargeable lithium battery including a first positive active material including a lithium nickel-based composite oxide and including secondary particles in which a plurality of primary particles are aggregated and a cobalt coating portion on a surface of the secondary particles; and a second positive active material including a lithium nickel-based composite oxide and including single particles and a cobalt coating portion on a surface of the single particles, wherein on the surface of the single particles of the second positive active material, there are a high-concentration coating region having a cobalt content of greater than or equal to about 30 at% and a low-concentration coating region having a cobalt content of less than or equal to about 25 at% based on the total amount of nickel and cobalt, and a difference between a cobalt content based on the total amount of nickel and cobalt in the high-concentration coating region and a cobalt content based on the total amount of nickel and cobalt in the low-concentration coating region is about 20 at% to about 50 at%.

## Description

### BACKGROUND OF THE INVENTION

### (a) Field of the Invention

A positive active material for a rechargeable lithium battery, a preparing method thereof, and a rechargeable lithium battery including the same are disclosed.

### (b) Description of the Related Art

A portable information device such as a cell phone, a laptop, a smart phone, and the like or an electric vehicle has used a rechargeable lithium battery having high energy density and easy portability as a driving power source. Recently, research has been actively conducted to use a rechargeable lithium battery with high energy density as a driving power source or power storage power source for hybrid or electric vehicles.

Various positive active materials have been investigated to realize rechargeable lithium batteries for applications to the uses. Among them, lithium nickel-based oxide, lithium nickel manganese cobalt composite oxide, lithium nickel cobalt aluminium composite oxide, lithium cobalt oxide, and the like are mainly used as a positive active material. However, these positive active materials have structure collapses or cracks during the repeated charges and discharges and thus have problems of deteriorating a long-term cycle-life of a rechargeable lithium battery and increasing resistance and thus do not exhibit satisfactory capacity characteristics. Accordingly, development of a novel positive active material securing long-term cycle-life characteristics as well as realizing high capacity and high energy density is required.

### SUMMARY OF THE INVENTION

Provided are a positive active material for a rechargeable lithium battery with improved initial charge/discharge efficiency, cycle-life characteristics, and safety while realizing a high capacity, a method for preparing the same, and a rechargeable lithium battery including the same.

In an embodiment, a positive active material for a rechargeable lithium battery includes a first positive active material including a lithium nickel-based composite oxide and including secondary particles in which a plurality of primary particles are aggregated and a cobalt coating portion on a surface of the secondary particles; and a second positive active material including a lithium nickel-based composite oxide and including single particles and a cobalt coating portion on a surface of the single particles, wherein on the surface of the single particles of the second positive active material, wherein there are a high-concentration coating region having a cobalt content of greater than or equal to about 30 at% and a low-concentration coating region having a cobalt content of less than or equal to about 25 at% based on the total amount of nickel and cobalt, and a difference between a cobalt content based on the total amount of nickel and cobalt in the high-concentration coating region and a cobalt content based on the total amount of nickel and cobalt in the low-concentration coating region is about 20 at% to about 50 at%.

In another embodiment, a method of preparing a positive active material for a rechargeable lithium battery includes mixing a first nickel-based hydroxide and a lithium raw material and performing a first heat treatment to prepare a first nickel-based oxide in a form of secondary particles in which a plurality of primary particles are aggregated; mixing a second nickel-based hydroxide and a lithium raw material and performing a second heat treatment to prepare a second nickel-based oxide in a form of single particles; and mixing the first nickel-based oxide, the second nickel-based oxide, and a cobalt raw material and performing a third heat treatment to obtain the aforementioned positive active material.

In another embodiment, a rechargeable lithium battery including a positive electrode including the positive active material, a negative electrode, and an electrolyte is provided.

At least some of the above and other features of the invention are set out in the claims.

The positive active material for a rechargeable lithium battery prepared according to an embodiment and the rechargeable lithium battery including the same may exhibit excellent charge/discharge efficiency, cycle-life characteristics, and safety while realizing high capacity and high energy density.

### BRIEF DESCRIPTION OF THE DRAWINGS

FIG. 1 is a schematic view illustrating a rechargeable lithium battery according to an embodiment.
FIGS. 2 to 4 are scanning electron microscope-energy dispersive X-ray spectroscopy (SEM-EDS) images of the second positive active material of Example 1.
FIGS. 5 to 7 are SEM-EDS images of the second positive active material of Comparative Example 1.
FIGS. 8 to 10 are SEM-EDS images of the fracture surface of the second positive active material of Example 1.
FIGS. 11 to 13 are SEM-EDS images of the fracture surface of the second positive active material of Comparative Example 1.
FIGS. 14 and 15 are SEM-EDS images of the second positive active material of Example 1.
FIG. 16 is a SEM-EDS image of the second positive active material of Comparative Example 1.

### DETAILED DESCRIPTION OF THE EMBODIMENTS

Hereinafter, specific embodiments will be described in detail so that those of ordinary skill in the art can easily implement them. However, this disclosure may be embodied in many different forms and is not construed as limited to the example embodiments set forth herein.

The terminology used herein is used to describe embodiments only, and is not intended to limit the present disclosure. The singular expression includes the plural expression unless the context clearly dictates otherwise.

As used herein, "a combination thereof" refers to a mixture, a laminate, a composite, a copolymer, an alloy, a blend, a reaction product, and the like of constituents.

Herein, it should be understood that terms such as "comprises," "includes," or "have" are intended to designate the presence of an embodied feature, number, step, element, or a combination thereof, but it does not preclude the possibility of the presence or addition of one or more other features, numbers, steps, elements, or a combination thereof.

In the drawings, the thickness of layers, films, panels, regions, etc., are exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface.

In addition, the average particle diameter may be measured by a method well known to those skilled in the art, for example, may be measured by a particle size analyzer, or may be measured by a transmission electron microscope photograph or a scanning electron microscope photograph. Alternatively, it is possible to obtain an average particle diameter value by measuring using a dynamic light scattering method, performing data analysis, counting the number of particles for each particle size range, and calculating from this. Unless otherwise defined, the average particle diameter may mean a diameter (D50) of particles having a cumulative volume of 50 volume% in the particle size distribution.

Herein, "or" is not to be construed as an exclusive meaning, for example, "A or B" is construed to include A, B, A+B, and the like.

### Positive Active Material

In an embodiment, a positive active material for a rechargeable lithium battery includes a first positive active material including a lithium nickel-based composite oxide and including secondary particles in which a plurality of primary particles are aggregated and a cobalt coating portion on a surface of the secondary particles; and a second positive active material including a lithium nickel-based composite oxide and including single particles and a cobalt coating portion on a surface of the single particles. Herein, on the surface of the single particles of the second positive active material, there are a high-concentration coating region having a cobalt content of greater than or equal to about 30 at% and a low-concentration coating region having a cobalt content of less than or equal to about 25 at% based on the total amount of nickel and cobalt, and a difference between a cobalt content based on the total amount of nickel and cobalt in the high-concentration coating region and a cobalt content based on the total amount of nickel and cobalt in the low-concentration coating region is about 20 at% to about 50 at%. Such a positive active material may realize high capacity and high energy density, and increase the efficiency of the second positive active material in a form of single particles, thereby improving overall initial charge and discharge efficiency and cycle-life characteristics, and battery safety.

### First Positive Active Material

The first positive active material has a polycrystal form, and includes secondary particles formed by aggregation of at least two or more primary particles.

The first positive active material according to an embodiment includes a cobalt coating portion on the surface of the secondary particles. The cobalt coating portion may be disposed on the whole or at least a portion of the surface of the secondary particle. The first positive active material is coated with cobalt and thus is effectively suppressed from structural collapse according to the repetitive charges and discharges, and accordingly, cycle-life characteristics at room temperature and high temperatures may be improved.

The cobalt coating portion includes a cobalt-containing compound. The cobalt-containing compound may, for example, include cobalt oxide, cobalt hydroxide, cobalt carbonate, a compound thereof, a mixture thereof, or the like, which may further include lithium, nickel, and/or the like. For example, the cobalt-containing compound may be lithium cobalt oxide or the like.

A content of the cobalt coating portion in the first positive active material may be about 0.01 mol% to about 7 mol%, for example, about 0.01 mol% to about 6 mol%, about 0.1 mol% to about 5 mol%, or about 0.5 mol% to about 3 mol% based on 100 mol% of the total metals excluding lithium in the first positive active material, and may also be about 0.01 at% to about 7 at%, about 0.1 at% to about 5 at%, or about 0.5 at% to about 3 at% based on 100 at% of the total metals excluding lithium in the first positive active material. In this case, the rechargeable lithium battery including the first positive active material may implement excellent cycle-life characteristics at room temperature and high temperature.

In the first positive active material, a thickness of the cobalt coating portion varies depending on the firing temperature during coating, and cobalt may penetrate into the active material and be coated and/or doped according to the firing temperature. Accordingly, the thickness of the cobalt coating portion may be, for example, about 1 nm to about 2 µm, about 1 nm to about 1.5 µm, about 1 nm to about 1 µm, about 1 nm to about 900 nm, about 1 nm to about 700 nm, about 1 nm to about 500 nm, about 1 nm to about 300 nm, about 5 nm to about 100 nm, or about 5 nm to about 50 nm. In this case, the rechargeable lithium battery including the first positive active material may exhibit excellent cycle-life characteristics at room temperature and high temperatures. Herein, the thickness of the cobalt coating portion may be measured through an electron microscope photograph of the active material.

An average particle diameter (D50) of the first positive active material, that is, the average particle diameter of the secondary particles may be about 7 µm to about 25 µm. For example, it may be about 9 µm to about 25 µm, about 10 µm to about 25 µm, about 15 µm to about 25 µm, or about 10 µm to about 20 µm. The average particle diameter of the secondary particles of the first positive active material may be the same as or greater than the average particle diameter of the single-particle second positive active material, which will be described later. The positive active material according to an embodiment may be in the form of a mixture of the first positive active material, which is polycrystalline and large particles, and the second positive active material, which is single particles and small particles, thereby improving a mixture density, and providing high capacity and high energy density. Herein, the average particle diameter of the first positive active material may be obtained by randomly selecting 30 secondary particle-type active materials from the electron microscope photograph of the positive active material to measure a particle diameter, and taking the particle diameter (D50) of the particles having a cumulative volume of 50 volume% in the particle size distribution as the average particle diameter.

The first positive active material is a nickel-based positive active material, and includes a lithium nickel-based composite oxide (or a first nickel-based oxide). A content of nickel in the lithium nickel-based composite oxide may be greater than or equal to about 30 mol%, for example, greater than or equal to about 40 mol%, greater than or equal to about 50 mol%, greater than or equal to about 60 mol%, greater than or equal to about 70 mol%, greater than or equal to about 80 mol%, greater than or equal to about 90 mol%, and less than or equal to about 99.9 mol%, or less than or equal to about 99 mol% based on the total amount of elements excluding lithium and oxygen. For example, the content of nickel in the lithium nickel-based composite oxide may be higher than that of each of other elements such as cobalt, manganese, and aluminium. When the nickel content satisfies the above range, the positive active material may exhibit excellent battery performance while realizing a high capacity.

The first positive active material may specifically include a lithium nickel-based composite oxide represented by Chemical Formula 1.

[Chemical Formula 1] Liₐ₁Niₓ₁M¹_{y1}M²_{1-x1-y1}O₂

In Chemical Formula 1, 0.9≤a1≤1.8, 0.3≤x1≤1, 0≤y1≤0.7, and M¹ and M² are each independently at least one element selected from Al, B, Ba, Ca, Ce, Co, Cr, Cu, F, Fe, Mg, Mn, Mo, Nb, P, S, Si, Sr, Ti, V, W, and Zr.

In Chemical Formula 1, for example, 0.4≤x1≤1 and 0≤y1≤0.6; 0.5≤x1≤1 and 0≤y1≤0.5; 0.6≤x1≤1 and 0≤y1≤0.4; 0.7≤x1≤1 and 0≤y1≤0.3; 0.8≤x1≤1 and 0≤y1≤0.2; or 0.9≤x1≤1 and 0≤y1≤0.1.

The first positive active material may include, for example, a lithium nickel-based composite oxide represented by Chemical Formula 2.

[Chemical Formula 2] Liₐ₂Niₓ₂CO_{y2}M³_{1-x2-y2}O₂

In Chemical Formula 2, 0.9≤a2≤1.8, 0.3≤x2<1, 0<y2≤0.7, and M³ is at least one element selected from Al, B, Ba, Ca, Ce, Cr, Cu, F, Fe, Mg, Mn, Mo, Nb, P, S, Si, Sr, Ti, V, W, and Zr.

In Chemical Formula 2, for example, 0.3≤x2≤0.99 and 0.01 ≤y2≤0.7; 0.4≤x2≤0.99 and 0.01≤y2≤0.6; 0.5≤x2≤0.99 and 0.01≤y2≤0.5; 0.6≤x2≤0.99 and 0.01≤y2≤0.4; 0.7≤2≤0.99 and 0.01≤y2≤0.3; 0.8≤x2≤0.99 and 0.01≤y2≤0.2; or 0.9≤x2≤0.99 and 0.01≤y2≤0.1.

The first positive active material may include, for example, a compound of Chemical Formula 3.

[Chemical Formula 3] Liₐ₃Niₓ₃CO_{y3}M⁴_{z3}M⁵_{1-x3-y3-z3}O₂

In Chemical Formula 3, 0.9≤a3≤1.8, 0.3≤x3≤0.98, 0.01≤y3≤0.69, 0.01≤z3≤0.69, M⁴ is at least one element selected from Al, and Mn, and M⁵ is at least one element selected from B, Ba, Ca, Ce, Cr, Cu, F, Fe, Mg, Mo, Nb, P, S, Si, Sr, Ti, V, W, and Zr.

In Chemical Formula 3, for example, 0.4≤x3≤0.98, 0.01≤y3≤0.59, and 0.01≤z3≤0.59; 0.5≤x3≤0.98, 0.01≤y3≤0.49, and 0.01≤z3≤0.49; 0.6≤x3≤0.98, 0.01≤y3≤0.39, and 0.01≤z3≤0.39; 0.7≤x3≤0.98, 0.01≤y3≤0.29, and 0.01≤z3≤0.29; 0.8≤x3≤0.98, 0.01≤y3≤0.19, and 0.01≤z3≤0.19; or 0.9≤x3≤0.98, 0.01≤y3≤0.09, and 0.01≤z3≤0.09.

### Second Positive Active Material

The second positive active material is in the form of a single particle, exists alone without a grain boundary within the particle, is composed of one particle, and may be single particle or have a monolith structure or a one body structure, in which particles are not aggregated with each other but exist as an independent phase in terms of morphology, or a non-aggregated particle, and may be expressed as a single particle (one body particle, single grain), for example, as a monocrystal (single crystal). The positive active material according to the embodiment includes the second positive active material in a form of single particles, thereby exhibiting improved cycle-life characteristics while implementing high capacity and high energy density.

The second positive active material has no particular limit to a shape but may have various shapes such as a polyhedron, an oval, a plate, a rod, an irregular shape, and the like. The single-particle second positive active material according to an embodiment may have a polyhedral structure having two or more surfaces.

The second positive active material according to an embodiment includes a cobalt coating portion on the surface of the single particle. Since the second positive active material is coated with cobalt, collapse of the structure due to repeated charging and discharging is effectively suppressed, so that cycle-life characteristics at room temperature and high temperature can be improved.

The cobalt coating portion includes a cobalt-containing compound. The cobalt-containing compound may be, for example, cobalt oxide, cobalt hydroxide, cobalt carbonate, a compound thereof, or a mixture thereof, and these may further include lithium and/or nickel. For example, the cobalt-containing compound may be lithium cobalt oxide or the like.

In an embodiment, instead of uniformly distributing the cobalt-containing compound over the entire surface of the single particle of the second positive active material, a high content of the cobalt-containing compound is coated on a portion of the surface of the single particle, thereby improving battery performance and increasing safety. Specifically, on the surface of the single particle, there are a high-concentration coating region having a cobalt content of greater than or equal to about 30 at% and a low-concentration coating region having a cobalt content of less than or equal to about 25 at% based on the total amount of nickel and cobalt, and a difference between the cobalt content based on the total amount of nickel and cobalt in the high-concentration coating region and the cobalt content based on the total amount of nickel and cobalt in the low-concentration coating region is about 20 at% to about 50 at%. When the second positive active material is applied, the initial charge/discharge efficiency and cycle-life characteristics of the battery may be improved compared to a case in which a cobalt-containing compound is uniformly coated on the entire surface of the single particle.

The high-concentration coating region is defined as a region in which the cobalt content based on the total amount of nickel and cobalt on the surface of the single particle is greater than or equal to about 30 at%, and for example, the cobalt content may be about 30 at% to about 70 at%, about 30 at% to about 60 at%, or about 40 at% to about 70 at%. The high-concentration coating region may occupy about 30% to about 90%, for example, about 30% to about 70%, or about 40% to about 80% of the total area of the single particle surface.

On the surface of the single particles of the second positive active material, there is also a low-concentration coating region in which the cobalt content is less than or equal to about 25 at% based on the total amount of nickel and cobalt, and the low-concentration coating region may occupy greater than or equal to about 10% of the total area of the surface of the single particle.

The low-concentration coating region is defined as a region in which the cobalt content based on the total amount of nickel and cobalt on the surface of the single particle is less than or equal to about 25 at%, for example, about 0 at% to about 25 at%, about 5 at% to about 25 at%, or about 10 at% to about 20 at%. The low-concentration coating region may occupy greater than or equal to about 10% of the total area of the single particle surface, and may occupy, for example, about 10% to about 70%, about 10% to about 50%, about 10% to about 30%, or about 10% to about 20%. As such, when the high-concentration coating region and the low-concentration coating region on the surface of the single particle each exist in the above area ranges, the initial charging and discharging efficiency and cycle-life characteristics may be improved compared to the case in which the cobalt-containing compound is evenly coated or the cobalt-containing compound is not coated.

The difference between the cobalt content based on the total amount of nickel and cobalt in the high-concentration coating region and the cobalt content based on the total amount of nickel and cobalt in the low-concentration coating region may be about 20 at% to about 50 at%, for example, about 20 at% to about 45 at%, or about 25 at% to about 40 at%. When the difference in the cobalt content in the high-concentration coating region and the low-concentration coating region is as described above, the efficiency of the single-particle second positive active material may be increased.

The second positive active material according to an embodiment is distinguished from the positive active material having a high cobalt content of greater than or equal to about 30 at% based on the total amount of nickel and cobalt in the lithium nickel-based composite oxide itself inside the active material and thus having a high cobalt content on the surface, and it corresponds to the positive active material in which the high-concentration coating region having a cobalt content of greater than or equal to about 30 at% is formed on a portion of the surface by coating of a cobalt-containing compound. For example, the cobalt content based on the total amount of nickel and cobalt inside the single particle of the second positive active material may be about 0 at% to about 15 at%, for example, about 0.1 at% to about 10 at%, or about 0.1 at% to about 6 at%, and may also be about 0 mol% to about 15 mol%, about 0.1 mol% to about 10 mol%, or about 0.1 mol% to about 6 mol%. The difference between the cobalt content based on the total amount of nickel and cobalt in the high-concentration coating region on the surface of the second positive active material and the cobalt content based on the total amount of nickel and cobalt inside the second positive active material may be greater than or equal to about 20 at%, greater than or equal to about 30 at%, or greater than or equal to about 40 at%. This second positive active material may realize high capacity and high cycle-life characteristics.

Meanwhile, an average value of the cobalt content based on the total amount of nickel and cobalt on the surface of the single particle of the second positive active material may be about 20 at% to about 60 at%, for example, about 20 at% to about 50 at%, or about 25 at% to about 45 at%. The average value may mean a value obtained by measuring the concentrations of about 5 to 10 portions on the surface of a single particle, irrespective of the high-concentration region and the low-concentration region, and obtaining an arithmetic average of these values.

In the second positive active material, the difference between the average value of the cobalt content based on the total amount of nickel and cobalt on the surface of the single particle and the cobalt content based on the total amount of nickel and cobalt inside the single particle may be about 10 at% to about 60 at%, for example, about 20 at% to about 50 at%, or about 25 at% to about 45 at%. In this case, the second positive active material may exhibit high efficiency and cycle-life characteristics while realizing a high capacity.

In an embodiment, the method of measuring the cobalt content based on the total amount of nickel and cobalt on the surface of the positive active material may include performing a scanning electron microscope-energy dispersive X-ray spectroscopy (SEM-EDS) on the surface of the positive active material, and calculating the ratio of the cobalt content to the sum of nickel and cobalt contents through quantitative analysis. The cobalt content based on the total amount of nickel and cobalt in the positive active material may be measured through SEM-EDS analysis of the fracture surface of the positive active material. The method for measuring the cobalt content may be inductively coupled plasma-mass spectrometry (ICP-MS) or inductively coupled plasma optical emission spectroscopy (ICP-OES), etc., in addition to SEM-EDS.

The second positive active material includes a lithium nickel-based composite oxide (or a second nickel-based oxide) as a nickel-based active material. The nickel content in the lithium nickel-based composite oxide may be greater than or equal to about 60 mol%, for example, greater than or equal to about 70 mol%, greater than or equal to about 80 mol%, or greater than or equal to about 90 mol%, and less than or equal to about 99.9 mol%, or less than or equal to about 99 mol% based on the total amount of elements excluding lithium and oxygen. For example, the nickel content in the lithium nickel-based composite oxide may be higher than each content of other transition metals such as cobalt, manganese, and aluminium. When the nickel content satisfies the above range, the positive active material may exhibit excellent battery performance while realizing a high capacity.

The second positive active material may include, for example, a lithium nickel-based composite oxide represented by Chemical Formula 11.

[Chemical Formula 11] Liₐ₁₁Niₓ₁₁Co_{y11}M¹¹_{1-x11-y11}O₂

In Chemical Formula 11, 0.9≤a11≤1.8, 0.6≤x11≤1, and 0≤y11≤0.15, and M¹¹ is at least one element selected from Al, B, Ba, Ca, Ce, Cr, Cu, F, Fe, Mg, Mn, Mo, Nb, P, S, Si, Sr, Ti, V, W, and Zr.

In Chemical Formula 11, x11 representing a Ni content may be, for example, 0.7≤x11≤1, 0.8≤x11≤1, or 0.9≤x11≤1. When the nickel content is greater than or equal to about 90 mol%, a very high capacity may be realized, and problems in which the structure collapses, cracks, or side reactions occur during cycle-life may be suppressed due to the cobalt coating portion according to an embodiment.

An average particle diameter of the second positive active material, that is, the average particle diameter of the single particles may be about 0.05 µm to about 7 µm, for example, about 0.05 µm to about 7 µm, about 0.1 µm to about 6 µm, or about 0.5 µm to about 5 µm, or about 1 µm to about 7 µm. The particle diameter of the second positive active material may be the same as or smaller than that of the first positive active material, and thus the density of the positive active material may be further increased. Herein, the average particle diameter of the second positive active material may be obtained by randomly selecting 30 single-particle active materials from the electron microscope photograph of the positive active material to measure a particle diameter, and taking the particle diameter (D50) of the particles having a cumulative volume of 50 volume% in the particle size distribution as the average particle diameter.

The BET specific surface area of the entire positive active material including the first positive active material and the second positive active material may be about 0.2 m²/g to about 0.6 m²/g, for example, about 0.3 m²/g to about 0.5 m²/g, or about 0.3 m²/g to about 0.4 m²/g. In this case, the positive active material may realize excellent charge/discharge efficiency and cycle-life characteristics. The BET specific surface area may be measured by, for example, a nitrogen gas adsorption method using a specific surface area measuring device HM model-1208 manufactured by MOUNTECH. Specifically, about 0.3 g of the positive active material sample is heated in a nitrogen atmosphere at 300 °C in a preprocessor for 1 hour, then additionally pretreated at 300 °C in a specific surface area measuring device for 15 minutes, cooled to the temperature of liquid nitrogen, and saturated and adsorbed with a gas of 30% nitrogen and 70% He. Thereafter, the amount of desorbed gas is measured by heating to room temperature, and the specific surface area may be calculated from the obtained result by a normal BET method.

In the positive active material according to an embodiment, the first positive active material may be included in an amount of about 50 wt% to about 90 wt%, and the second positive active material may be included in an amount of about 10 wt% to about 50 wt% based on the total amount of the first positive active material and the second positive active material. The first positive active material may be for example included in an amount of about 60 wt% to about 90 wt%, or about 70 wt% to about 90 wt% and the second positive active material may be for example included in an amount of about 10 wt% to about 40 wt%, or about 10 wt% to about 30 wt%. When the content ratio of the first positive active material and the second positive active material is as described above, the positive active material including the same may realize high capacity, improve a mixture density, and exhibit high energy density.

### Method of Preparing Positive Active Material

In an embodiment, a method of preparing a positive active material for a rechargeable lithium battery includes mixing a first nickel-based hydroxide and a lithium raw material and performing a first heat treatment to prepare a first nickel-based oxide in a form of secondary particles in which a plurality of primary particles are aggregated, mixing a second nickel-based hydroxide and a lithium raw material and performing a second heat treatment to prepare a second nickel-based oxide in a form of single particles, and mixing the first nickel-based oxide, the second nickel-based oxide, and a cobalt raw material and performing a third heat treatment to obtain the final positive active material including the aforementioned first positive active material and second positive active material.

The first positive active material may be a material in which a cobalt-containing compound is coated on the surface of the first nickel-based oxide, and the second positive active material may be a material in which the surface of the second nickel-based oxide is coated with a cobalt-containing compound.

In an embodiment, the first positive active material and the second positive active material may be prepared by not individually coating the first nickel-based oxide and the second nickel-based oxide but simultaneously coating them after first mixing them. According to this, instead of uniformly coating the surface of the single particle, which is the second positive active material, the cobalt-containing compound is coated on only a portion of the surface with a high content, and efficiency of the single particle is increased, so that the initial charge/discharge efficiency and cycle-life characteristics of the rechargeable lithium battery including the same may be improved.

The first nickel-based hydroxide and the second nickel-based hydroxide are precursors of the positive active material and may be each independently a nickel hydroxide, a nickel-based composite hydroxide containing an element other than nickel, or a nickel-transition element composite hydroxide containing a transition metal other than nickel.

For example, the first nickel-based hydroxide may be represented by Chemical Formula 21.

[Chemical Formula 21] Niₓ₂₁M²¹_{y21}M²²_{1-x21-y21}(OH)₂

In Chemical Formula 21, 0.3≤x21≤1, 0≤y21≤0.7, and M²¹ and M²² are each independently at least one element selected from Al, B, Ba, Ca, Ce, Co, Cr, Cu, F, Fe, Mg, Mn, Mo, Nb, P, S, Si, Sr, Ti, V, W, and Zr.

The second nickel-based hydroxide may be represented by Chemical Formula 31.

[Chemical Formula 31] Niₓ₃₁CO_{y31}M³¹_{1-x31-y31}(OH)₂

In Chemical Formula 31, 0.6≤x31≤1, and 0≤y31≤0.15, and M³¹ is at least one element selected from Al, B, Ba, Ca, Ce, Cr, Cu, F, Fe, Mg, Mn, Mo, Nb, P, S, Si, Sr, Ti, V, W, and Zr.

The particle diameters of the first nickel hydroxide and the second nickel hydroxide may each independently be about 1 µm to about 30 µm, for example, about 1 µm to about 25 µm, about 1 µm to about 20 µm, or about 5 µm to about 20 µm. The particle size of the nickel-based hydroxide is measured by a particle size analyzer using laser diffraction, and may mean a diameter (D50) of particles having a cumulative volume of 50 volume% in the particle size distribution.

The lithium raw material is a lithium source of the positive active material and may include, for example, Li₂CO₃, LiOH, a hydrate thereof, or a combination thereof.

When the first nickel-based hydroxide is mixed with the lithium raw material, a ratio of a mole number of lithium in the lithium raw material relative to a mole number of metals included in the first nickel-based hydroxide, for example, may be greater than or equal to about 0.8, greater than or equal to about 0.85, greater than or equal to about 0.9, greater than or equal to about 0.95, or greater than or equal to about 1.0 and less than or equal to about 1.8, less than or equal to about 1.5, less than or equal to about 1.2, less than or equal to about 1.1, or less than or equal to about 1.05.

The first heat-treatment may be performed under an oxidizing gas atmosphere, for example, under an oxygen atmosphere or the air atmosphere. In addition, the first heat-treatment may be performed at about 600 °C to about 900 °C or about 600 °C to about 800 °C, for example, for about 5 hours to about 20 hours, for example, 5 hours to 15 hours. The first nickel-based oxide obtained through the first heat treatment may be referred to as a first lithium nickel-based oxide or a first nickel-based composite oxide.

When the second nickel-based hydroxide is mixed with the lithium raw material, a ratio of a mole number of lithium in the lithium raw material relative to a mole number of a metal included in the second nickel-based hydroxide may be, for example, greater than or equal to about 0.8, greater than or equal to about 0.85, greater than or equal to about 0.9, greater than or equal to about 0.95, or greater than or equal to about 1.0 and less than or equal to about 1.8, less than or equal to about 1.5, less than or equal to about 1.2, less than or equal to about 1.1, or less than or equal to about 1.05.

The second heat-treatment also may be performed under the oxidizing gas atmosphere, for example, under the oxygen atmosphere or under the air atmosphere. In addition, the second heat-treatment may be performed, for example, at about 800 °C to about 1100 °C, or about 900 °C to about 1000 °C, for example, for about 5 hours to about 20 hours or about 5 hours to about 15 hours. The second nickel-based oxide obtained through the second heat treatment may be referred to as a second lithium nickel-based oxide or a second nickel-based composite oxide.

The second nickel-based oxide is in a form of single particles, and the single-particle form may be obtained by controlling the conditions such as temperature and time of the second heat treatment or may be obtained through various conditions when synthesizing the second nickel-based hydroxide by the co-precipitation method.

The method of preparing the positive active material for a rechargeable lithium battery may further include pulverizing the product obtained by mixing the second nickel-based hydroxide and the lithium raw material and performing the second heat treatment, through which a second nickel-based oxide of single particles is may also be obtained. The pulverization may be performed by using various pulverizing devices such as a jet mill and the like. Herein, the pulverizing of the obtained product is a process of obtaining a single-particle active material, which is distinguished from the crushing of a general active material.

When the first nickel-based oxide is mixed with the second nickel-based oxide, the first nickel-based oxide and the second nickel-based oxide may have a weight ratio of about 9:1 to about 5:5, for example, about 9:1 to about 6:4, or about 8:2 to about 7:3. When the first nickel-based oxide and the second nickel-based oxide are mixed within the aforementioned range, the obtained positive active material may exhibit high-capacity high energy density and high electrode plate density.

Then, the cobalt coating is performed by mixing the first nickel-based oxide, the second nickel-based oxide, and the cobalt raw material and performing a third heat treatment. The cobalt raw material may be, for example, cobalt hydroxide, cobalt carbonate, cobalt sulfate, cobalt oxide, cobalt nitrate, and the like. When the content of the metal other than lithium in the total positive active material is 100 parts by mole, it may be mixed so that an amount of cobalt contained in the cobalt raw material may be about 0.01 parts by mole to about 7 parts by mole, about 0.01 parts by mole to about 5 parts by mole, or about 0.1 parts by mole to about 4 parts by mole.

The cobalt coating may be performed either dry or wet. For example, after mixing the first nickel-based oxide, the second nickel-based oxide, and the cobalt raw material are mixed without a solvent, the third heat treatment is performed for the dry coating. Or, the first nickel-based oxide and the second nickel-based oxide are added to a solvent such as distilled water and the like and then, washed, while mixed, and then, the cobalt raw material is added dropwise thereto to perform the wet coating and then, followed by the third heat treatment.

In an embodiment, when the first nickel-based oxide, the second nickel-based oxide, and the cobalt raw material are mixed, a lithium raw material may be mixed therewith together. The lithium raw material may be, for example Li₂CO₃, LiOH, a hydrate thereof, or a combination thereof. The lithium raw material may be mixed in an amount of about 1 part by mole to about 4 parts by mole based on about 1 part by mole of the cobalt raw material mixed therewith together, for example, in an amount of about 1.5 parts by mole to about 3 parts by mole. In other words, the lithium raw material may be added about 1 time to about 4 times or about 1.5 times to about 3 times as much as the cobalt raw material. Or, the lithium raw material may be mixed in an amount of about 0.01 parts by mole to about 10 parts by mole, about 0.1 parts by mole to about 8 parts by mole, or about 1 part by mole to about 6 parts by mole based on about 100 parts by mole of a total amount of metals excluding lithium in the positive active material. In this way, when the lithium raw material is added together during the cobalt coating, a stable cobalt coating portion may be formed on the positive active material surface, wherein the cobalt coating portion may be formed to have about 30% to about 80% of a high-concentration coating region on the single particle surface according to an embodiment. Accordingly, initial charge and discharge efficiency and cycle-life characteristics of a rechargeable lithium battery may be improved.

In an embodiment, when the wet cobalt coating is adopted, the first nickel-based oxide, the second nickel-based oxide, and the cobalt raw material may be mixed with a pH controlling agent such as sodium hydroxide and the like. The pH controlling agent may be added in an amount of about 0.5 parts by mole to about 5 parts by mole based on about 1 part by mole of the cobalt raw material. In this way, the pH controlling agent and the like may be used to effectively form the cobalt coating portion according to an embodiment.

The third heat treatment may be performed under an oxidizing gas atmosphere such as oxygen or air atmosphere and the like. In addition, the third heat-treatment may be performed, for example, at about 650 °C to about 900 °C or about 650 °C to about 800 °C. The third heat-treatment may be performed during variable time depending on a heat-treatment temperature and the like, for example, for about 5 hours to about 30 hours or about 10 hours to about 24 hours.

Thereafter, by terminating the heat treatment and cooling to room temperature, the aforementioned positive active material for a rechargeable lithium battery according to an embodiment may be prepared. The prepared positive active material is a state in which a first positive active material including secondary particles formed by aggregation of primary particles and a second positive active material in a form of single particles are mixed. On the surface of the single particles of the second positive active material, there is a high-concentration coating region having a cobalt content of greater than or equal to about 30 at% and a low-concentration coating region having a cobalt content of less than or equal to about 25 at% based on the total amount of nickel and cobalt, and a difference between a cobalt content based on the total amount of nickel and cobalt in the high-concentration coating region and a cobalt content based on the total amount of nickel and cobalt in the low-concentration coating region is about 20 at% to about 50 at%.

### Positive Electrode

A positive electrode for a rechargeable lithium battery may include a current collector and a positive active material layer on the current collector. The positive active material layer includes a positive active material, and may further include a binder and/or a conductive material.

The binder improves binding properties of positive active material particles with one another and with a current collector. Examples thereof may be polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

The content of the binder in the positive active material layer may be about 1 wt% to about 5 wt% based on the total weight of the positive active material layer.

The conductive material is included to provide electrode conductivity and any electrically conductive material may be used as a conductive material unless it causes a chemical change in a battery. Examples of the conductive material include a carbon-based material such as natural graphite, artificial graphite, carbon black, acetylene black, ketjen black, a carbon fiber, a carbon nanofiber, carbon nanotube, and the like; a metal-based material of a metal powder or a metal fiber including copper, nickel, aluminium, silver, and the like; a conductive polymer such as a polyphenylene derivative; or a mixture thereof.

The content of the conductive material in the positive active material layer may be about 1 wt% to about 5 wt% based on the total weight of the positive active material layer.

An aluminium foil may be used as the positive electrode current collector, but is not limited thereto.

### Negative Electrode

A negative electrode for a rechargeable lithium battery includes a current collector and a negative active material layer on the current collector. The negative active material layer includes a negative active material, and may further include a binder and/or a conductive material.

The negative active material may include a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example, crystalline carbon, amorphous carbon, or a combination thereof as a carbon-based negative active material. The crystalline carbon may be non-shaped, or sheet, flake, spherical, or fiber shaped natural graphite or artificial graphite. The amorphous carbon may be a soft carbon, a hard carbon, a mesophase pitch carbonization product, calcined coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative active material or a Sn-based negative active material. The Si-based negative active material may include silicon, a silicon-carbon composite, SiOₓ (0 < x < 2), a Si-Q alloy (wherein Q is an element selected from an alkali metal, an alkaline-earth metal, a Group 13 element, a Group 14 element, a Group 15 element, a Group 16 element, a transition metal, a rare earth element, and a combination thereof, but not Si) and the Sn-based negative active material may include Sn, SnO₂, a Sn-R alloy (wherein R is an element selected from an alkali metal, an alkaline-earth metal, a Group 13 element, a Group 14 element, a Group 15 element, a Group 16 element, a transition metal, a rare earth element, and a combination thereof, but not Sn). At least one of these materials may be mixed with SiO₂. The elements Q and R may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, TI, Ge, P, As, Sb, Bi, S, Se, Te, Po, and a combination thereof.

The silicon-carbon composite may be, for example, a silicon-carbon composite including a core including crystalline carbon and silicon particles and an amorphous carbon coating layer disposed on the surface of the core. The crystalline carbon may be artificial graphite, natural graphite, or a combination thereof. The amorphous carbon precursor may be a coal-based pitch, mesophase pitch, petroleum-based pitch, coal-based oil, petroleum-based heavy oil, or a polymer resin such as a phenol resin, a furan resin, or a polyimide resin. In this case, the content of silicon may be about 10 wt% to about 50 wt% based on the total weight of the silicon-carbon composite. In addition, the content of the crystalline carbon may be about 10 wt% to about 70 wt% based on the total weight of the silicon-carbon composite, and the content of the amorphous carbon may be about 20 wt% to about 40 wt% based on the total weight of the silicon-carbon composite. In addition, a thickness of the amorphous carbon coating layer may be about 5 nm to about 100 nm. An average particle diameter (D50) of the silicon particles may be about 10 nm to about 20 µm. The average particle diameter (D50) of the silicon particles may be preferably about 10 nm to about 200 nm. The silicon particles may exist in an oxidized form, and in this case, an atomic content ratio of Si:O in the silicon particles indicating a degree of oxidation may be about 99:1 to about 33:67. The silicon particles may be SiOₓ particles, and in this case, the range of x in SiOₓ may be greater than about 0 and less than about 2. In the present specification, unless otherwise defined, an average particle diameter (D50) indicates a particle where an accumulated volume is about 50 volume% in a particle distribution.

The Si-based negative active material or Sn-based negative active material may be mixed with the carbon-based negative active material. When the Si-based negative active material or Sn-based negative active material and the carbon-based negative active material are mixed and used, the mixing ratio may be a weight ratio of about 1:99 to about 90:10.

In the negative active material layer, the negative active material may be included in an amount of about 95 wt% to about 99 wt% based on the total weight of the negative active material layer.

In an embodiment, the negative active material layer further includes a binder, and may optionally further include a conductive material. The content of the binder in the negative active material layer may be about 1 wt% to about 5 wt% based on the total weight of the negative active material layer. In addition, when the conductive material is further included, the negative active material layer may include about 90 wt% to about 98 wt% of the negative active material, about 1 wt% to about 5 wt% of the binder, and about 1 wt% to about 5 wt% of the conductive material.

The binder serves to well adhere the negative active material particles to each other and also to adhere the negative active material to the current collector. The binder may be a water-insoluble binder, a water-soluble binder, or a combination thereof.

Examples of the water-insoluble binder include polyvinyl chloride, carboxylated polyvinyl chloride, polyvinyl fluoride, an ethylene oxide-containing polymer, an ethylene propylene copolymer, polystyrene, polyvinylpyrrolidone, polyurethane, polytetrafluoroethylene, polyvinylidene fluoride, polyethylene, polypropylene, polyamideimide, polyimide, or a combination thereof.

The water-soluble binder may include a rubber binder or a polymer resin binder. The rubber binder may be selected from a styrene-butadiene rubber, an acrylated styrene-butadiene rubber, an acrylonitrile-butadiene rubber, an acrylic rubber, a butyl rubber, a fluororubber, and a combination thereof. The polymer resin binder may be selected from polyethylene oxide, polyvinylpyrrolidone, polyepichlorohydrin, polyphosphazene, polyacrylonitrile, an ethylene propylene diene copolymer, polyvinylpyridine, chlorosulfonated polyethylene, latex, a polyester resin, an acrylic resin, a phenol resin, an epoxy resin, polyvinyl alcohol, and a combination thereof.

When a water-soluble binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. As the alkali metal, Na, K, or Li may be used. The amount of the thickener used may be about 0.1 parts by weight to about 3 parts by weight based on 100 parts by weight of the negative active material.

The conductive material is included to provide electrode conductivity and any electrically conductive material may be used as a conductive material unless it causes a chemical change in a battery. Examples of the conductive material include a carbon-based material such as natural graphite, artificial graphite, carbon black, acetylene black, ketjen black, a carbon fiber, a carbon nanofiber, carbon nanotube, and the like; a metal-based material of a metal powder or a metal fiber including copper, nickel, aluminium, silver, and the like; a conductive polymer such as a polyphenylene derivative; or a mixture thereof.

The negative electrode current collector may be selected from a copper foil, a nickel foil, a stainless steel foil, a titanium foil, a nickel foam, a copper foam, a polymer substrate coated with conductive metal, or a combination thereof.

### Rechargeable Lithium Battery

Another embodiment provides a rechargeable lithium battery including a positive electrode, a negative electrode, a separator between the positive electrode and the positive electrode, and an electrolyte.

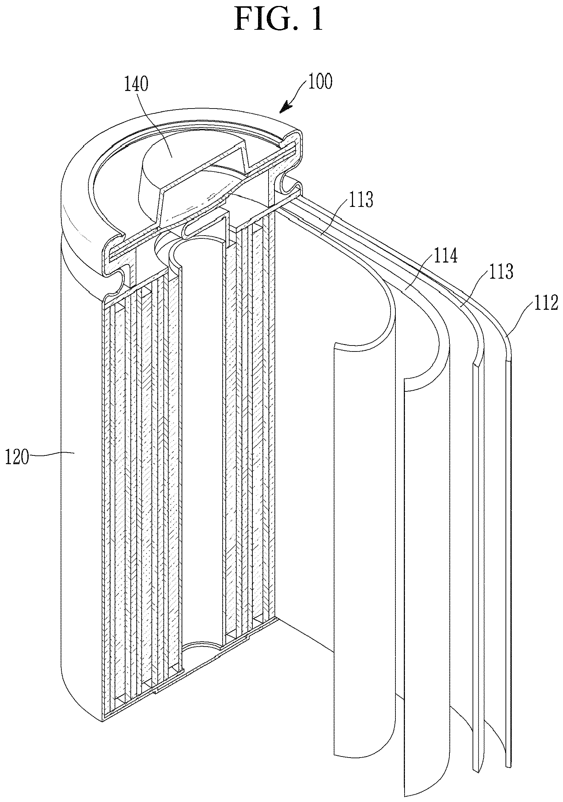

FIG. 1 is a schematic view illustrating a rechargeable lithium battery according to an embodiment. Referring to FIG. 1, a rechargeable lithium battery 100 according to an embodiment includes a battery cell including a positive electrode 114, a negative electrode 112 facing the positive electrode 114, a separator 113 between the positive electrode 114 and the negative electrode 112, and an electrolyte for a rechargeable lithium battery impregnating the positive electrode 114, the negative electrode 112, and the separator 113, a battery case 120 housing the battery cell, and a sealing member 140 sealing the battery case 120.

The electrolyte includes a non-aqueous organic solvent and a lithium salt.

The non-aqueous organic solvent serves as a medium for transmitting ions taking part in the electrochemical reaction of a battery. The non-aqueous organic solvent may be a carbonate-based, ester-based, ether-based, ketone-based, or alcohol-based solvent, or aprotic solvent. Examples of the carbonate-based solvent include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. Examples of the ester-based solvent include methyl acetate, ethyl acetate, n-propyl acetate, dimethyl acetate, methyl propionate, ethyl propionate, γ-butyrolactone, decanolide, valerolactone, mevalonolactone, caprolactone, and the like. The ether-based solvent may be dibutyl ether, tetraglyme, diglyme, dimethoxyethane, 2-methyltetrahydrofuran, tetrahydrofuran, and the like and the ketone-based solvent may be cyclohexanone, and the like. In addition, the alcohol-based solvent may be ethyl alcohol, isopropyl alcohol, etc. and the aprotic solvent may be nitriles such as R-CN (where R is a C2 to C20 linear, branched, or cyclic hydrocarbon group and may include a double bond, an aromatic ring, or an ether bond), amides such as dimethylformamide, dioxolanes such as 1,3-dioxolane, sulfolanes, and the like.

The non-aqueous organic solvent may be used alone or in a mixture. When the non-aqueous organic solvent is used in a mixture, the mixture ratio may be controlled in accordance with a desirable battery performance.

In addition, in the case of the carbonate-based solvent, a mixture of a cyclic carbonate and a chain carbonate may be used. In this case, when the cyclic carbonate and the chain carbonate are mixed in a volume ratio of about 1:1 to about 1:9, the electrolyte may exhibit excellent performance.

The non-aqueous organic solvent may further include an aromatic hydrocarbon-based organic solvent in addition to the carbonate-based solvent. In this case, the carbonate-based solvent and the aromatic hydrocarbon-based organic solvent may be mixed in a volume ratio of about 1:1 to about 30:1.

As the aromatic hydrocarbon-based solvent, an aromatic hydrocarbon-based compound represented by Chemical Formula I may be used.

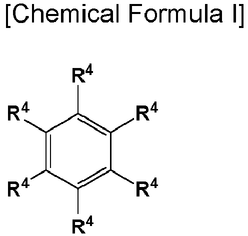

In Chemical Formula I, R⁴ to R⁹ are the same or different and are selected from hydrogen, a halogen, a C1 to C10 alkyl group, a C1 to C10 haloalkyl group, and a combination thereof.

Specific examples of the aromatic hydrocarbon-based solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and a combination thereof.

The electrolyte may further include vinylene carbonate or an ethylene carbonate-based compound of Chemical Formula II in order to improve cycle-life of a battery.

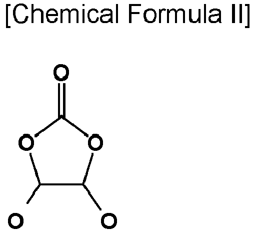

In Chemical Formula II, R¹⁰ and R¹¹ are the same or different, and are selected from hydrogen, a halogen, a cyano group, a nitro group, and a fluorinated C1 to C5 alkyl group, provided that at least one of R¹⁰ and R¹¹ is selected from a halogen, a cyano group, a nitro group, and a fluorinated C1 to C5 alkyl group, but both of R¹⁰ and R¹¹ are not hydrogen.

Examples of the ethylene carbonate-based compound may be difluoro ethylene carbonate, chloroethylene carbonate, dichloroethylene carbonate, bromoethylene carbonate, dibromoethylene carbonate, nitroethylene carbonate, cyanoethylene carbonate, or fluoroethylene carbonate. The amount of the additive for improving cycle-life may be used within an appropriate range.

The lithium salt dissolved in the non-aqueous organic solvent supplies lithium ions in a battery, enables a basic operation of a rechargeable lithium battery, and improves transportation of the lithium ions between positive and negative electrodes.

Examples of the lithium salt may include one or more selected from LiPF₆, LiBF₄, LiSbF₆, LiAsF₆, LiN(SO₂C₂F₅)₂, Li(CF₃SO₂)₂N, LiN(SO₃C₂F₅)₂, Li(FSO₂)₂N (lithium bis(fluorosulfonyl)imide; LiFSI), LiC₄F₉SO₃, LiClO₄, LiAlO₂, LiAlCl₄, LiPO₂F₂, LiN(CₓF₂ₓ₊₁SO₂)(C_{y}F_{2y+1}SO₂), where x and y are natural numbers, for example, integers from 1 to 20, lithium difluoro(bisoxalato) phosphate, LiCl, Lil, LiB(C₂O₄)₂ (lithium bis(oxalato) borate; LiBOB), and lithium difluoro(oxalato)borate (LiDFOB).

The lithium salt may be used in a concentration ranging from about 0.1 M to about 2.0 M. When the lithium salt is included at the above concentration range, an electrolyte may have excellent performance and lithium ion mobility due to optimal electrolyte conductivity and viscosity.

The separator 113 separates a positive electrode 114 and a negative electrode 112 and provides a transporting passage for lithium ions and may be any generally-used separator in a lithium ion battery. In other words, it may have low resistance to ion transport and excellent impregnation for an electrolyte. For example, the separator 113 may include glass fiber, polyester, polyethylene, polypropylene, polytetrafluoroethylene, or a combination thereof, and may be in the form of a nonwoven fabric or a woven fabric. For example, in a lithium ion battery, a polyolefin-based polymer separator such as polyethylene and polypropylene may be mainly used. In order to ensure the heat resistance or mechanical strength, a coated separator including a ceramic component or a polymer material may be used. Optionally, it may have a mono-layered or multilayered structure.

Rechargeable lithium batteries may be classified as lithium ion batteries, lithium ion polymer batteries, and lithium polymer batteries according to the presence of a separator and the kind of electrolyte used therein. The rechargeable lithium batteries may have a variety of shapes and sizes, and include cylindrical, prismatic, coin, or pouch-type batteries, and may be thin film batteries or may be rather bulky in size. Structures and manufacturing methods for lithium ion batteries pertaining to this disclosure are well known in the art.

The rechargeable lithium battery according to an embodiment may be used in an electric vehicle (EV), a hybrid electric vehicle such as a plug-in hybrid electric vehicle (PHEV), and a portable electronic device because it implements a high capacity and has excellent storage stability, cycle-life characteristics, and high rate characteristics at high temperatures.

Hereinafter, examples of the present invention and comparative examples are described. It is to be understood, however, that the examples are for the purpose of illustration and are not to be construed as limiting the present invention.

### Example 1

### 1. Preparation of First Nickel-based Oxide in a Form of Secondary Particles

As metal raw materials, nickel sulfate (NiSO₄·6H₂O), cobalt sulfate (CoSO₄·7H₂O) and manganese sulfate (MnSO₄·H₂O) were mixed in a molar ratio of 95:4:1 and dissolved in distilled water as a solvent to prepare a mixed solution, and 10 wt% ammonia water (NH₄OH) was prepared to form a complex and 20 wt% sodium hydroxide (NaOH) was prepared as a precipitating agent.

After adding the dilute ammonia water solution to the continuous reactor, the metal raw material mixed solution was continuously added, and sodium hydroxide was added to maintain the pH inside the reactor. After slowly conducting a reaction for about 80 hours, when the reaction was stabilized, a product overflown therefrom was collected and then, washed and dried, obtaining a final precursor. Accordingly, a first nickel-based hydroxide (Ni_{0.95}Co_{0.04}Mn_{0.01}(OH)₂) in a form of secondary particles in which primary particles are aggregated was obtained, washed and dried.

The first nickel-based hydroxide was mixed with LiOH so that a molar ratio of lithium to the total amount of metal of the first nickel-based hydroxide was 1.04, and the mixture was subjected to a first heat treatment at about 750 °C for 15 hours in an oxygen atmosphere to obtain the first nickel-based oxide (LiNi_{0.95}Co_{0.04}Mn_{0.01}O₂). The obtained first nickel-based oxide was in a form of secondary particles in which primary particles are aggregated, and the secondary particle had an average particle diameter of about 15 µm.

### 2. Preparation of Second Nickel-based Oxide in a Form of Single Particles

A mixed solution was prepared by dissolving nickel sulfate, cobalt sulfate, and manganese sulfate in distilled water as a solvent. In order to form a complex, 10 wt% dilute ammonia water (NH₄OH) solution and 20 wt% sodium hydroxide (NaOH) as a precipitant were prepared. Subsequently, the raw metal material mixed solution, the ammonia water, and the sodium hydroxide were each put into a reactor. Then, while stirred, the reaction proceeded for about 20 hours. Then, the slurry solution in the reactor was filtered, washed with distilled water with high purity, and dried for 24 hours, obtaining a second nickel-based hydroxide (Ni_{0.94}Co_{0.05}Mn_{0.01}(OH)₂) powder. The obtained second nickel-based hydroxide powder had an average particle diameter of about 4.0 µm and a specific surface area of about 15 m²/g, which was measured in a BET method.

The obtained second nickel-based hydroxide and LiOH were mixed to satisfy Li/(Ni+Co+Mn) = 1.05 and then, put in a furnace to perform a second heat treatment at 910 °C under an oxygen atmosphere for 8 hours. Subsequently, a product obtained therefrom was pulverized for about 30 minutes and then, separated/dispersed into a plurality of second nickel-based oxides having a single-particle form. The obtained single particle-type second nickel-based oxides (LiNi_{0.94}Co_{0.05}Mn_{0.01}O₂) had an average particle diameter of about 3.7 µm.

### 3. Preparation of Cobalt Coating Portion and Final Positive Active Material

The first nickel-based oxide and the second nickel-based oxide were mixed in a weight ratio of 7:3, and this mixture was washed in a weight ratio of 1:1 with water in a stirrer and dried at 150 °C. Subsequently, 5 parts by mole of lithium hydroxide and 2.5 parts by mole of cobalt oxide based on 100 parts by mole of transition metals of the total nickel-based oxides were additionally mixed therewith and then, put in the furnace to perform a third heat treatment at about 710 °C under an oxygen atmosphere for 15 hours. Subsequently, the furnace was cooled down to room temperature, obtaining a final positive active material in which the first positive active material and the second positive active material are mixed.

The final positive active material was a mixture of the first positive active material in a form of secondary particles and the second positive active material in a form of single particles which are respectively coated with cobalt.

### 4. Manufacture of Positive Electrode

95 wt% of the final positive active material, 3 wt% of a polyvinylidene fluoride binder, and 2 wt% of carbon nanotube conductive material were mixed in an N-methylpyrrolidone solvent to prepare positive active material slurry. The positive active material slurry was applied to an aluminium current collector, dried, and then compressed to manufacture a positive electrode.

### 5. Manufacture of Coin Half-Cell

A coin half-cell was manufactured by disposing a separator having a polyethylene polypropylene multilayer structure between the manufactured positive electrode and lithium metal counter electrode, and injecting an electrolyte in which 1.0 M LiPF₆ lithium salt was added to a solvent in which ethylene carbonate and diethyl carbonate were mixed in a volume ratio of 50:50.

### Comparative Example 1

A positive active material and a battery cell were manufactured in the same method as in Example 1 except that the first nickel-based oxide and the second nickel-based oxide were mixed after respectively being coated with cobalt rather than cobalt-coating the first nickel-based oxide and the second nickel-based oxide after mixing them in "3. Preparation of cobalt coating portion and final positive active material of Example 1."

The cobalt coating proceeded as follows. 5 parts by mole of lithium hydroxide and 2.5 parts by mole of cobalt oxide based on 100 parts by mole of transition elements were mixed with the first nickel-based oxide and then, put in a furnace and thirdly heat-treated at about 710 °C for 15 hours under an oxygen atmosphere and then, cooled down to room temperature, obtaining a first positive active material. In addition, 5 parts by mole of lithium hydroxide and 2.5 parts by mole of cobalt oxide based on 100 parts by mole of transition elements were mixed with the second nickel-based oxide and then, put in a furnace and thirdly heat-treated at about 850 °C for 15 hours under an oxygen atmosphere and then, cooled down to room temperature, obtaining a second positive active material. The cobalt-coated first positive active material and the cobalt-coated second positive active material were mixed in a weight ratio of 7:3, preparing a final positive active material according to Comparative Example 1.

### Evaluation Example 1: Analysis of Surface and Fracture Surface of Single Particles

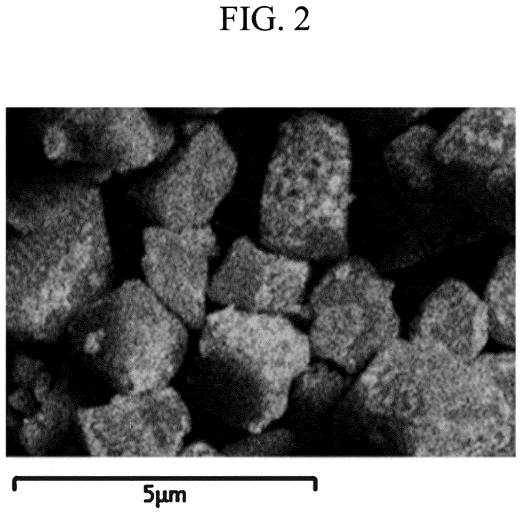

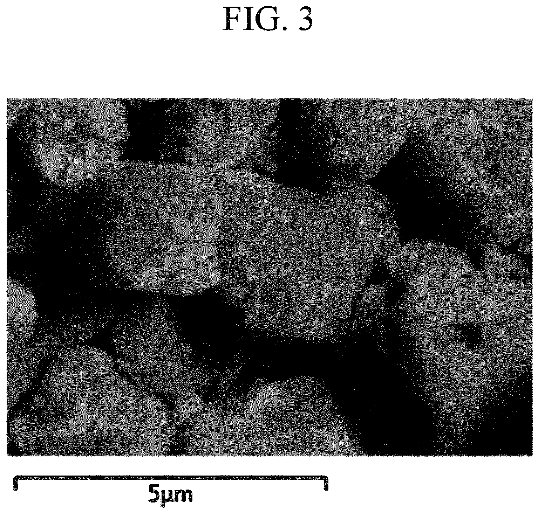

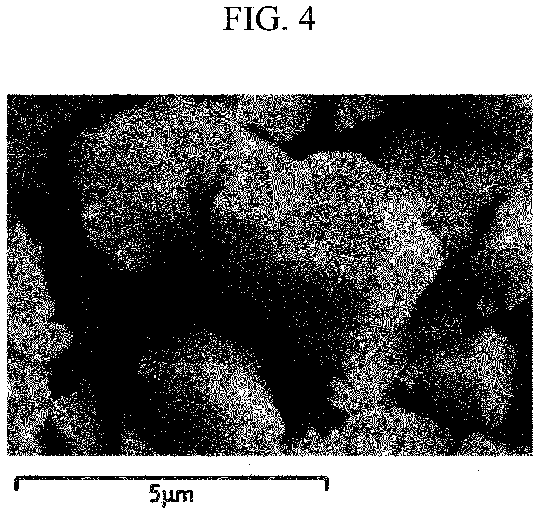

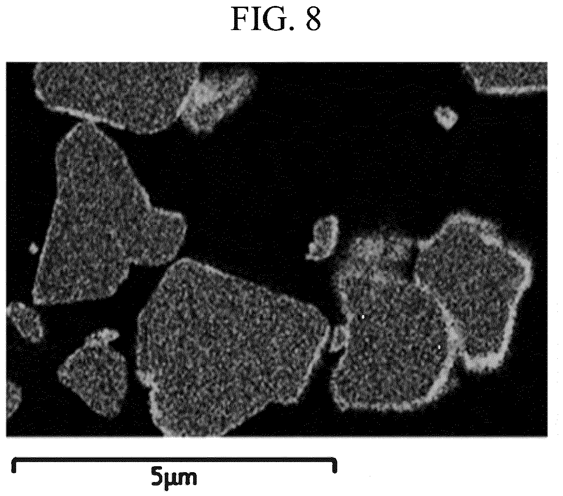

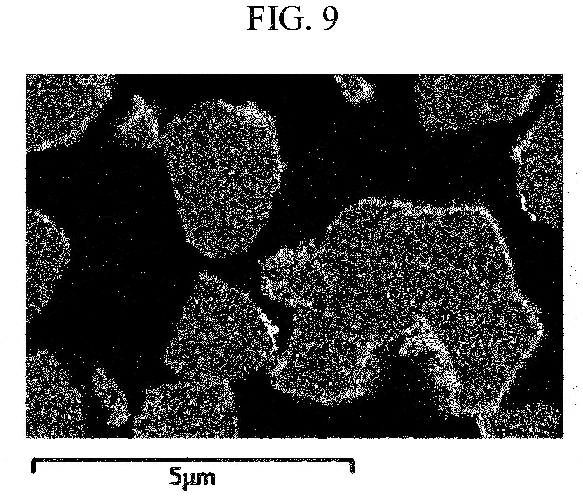

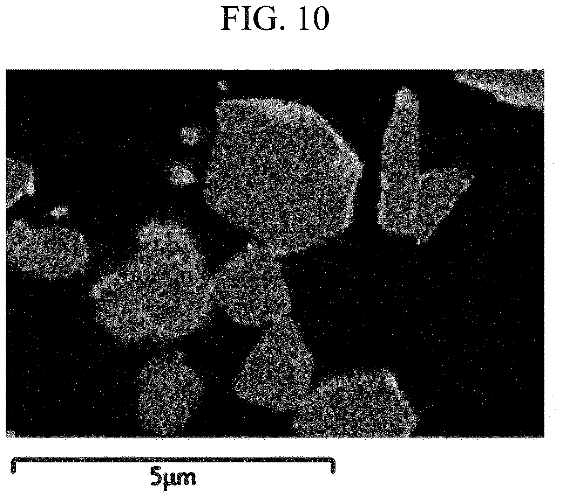

FIGS. 2 to 4 are SEM-EDS analysis images of particles corresponding to the second positive active material in the final positive active material of Example 1, in which cobalt elements are highlighted with light blue. In addition, FIGS. 8 to 10 are SEM-EDS analysis images of the fracture surface of the second positive active material of Example 1, in which similarly, the cobalt elements are highlighted with light blue.

Referring to FIGS. 2 to 4 and FIGS. 8 to 10, the cobalt elements are not uniformly dispersed on the surfaces of the single particles but distributed at a high concentration on some surfaces of the single particles.

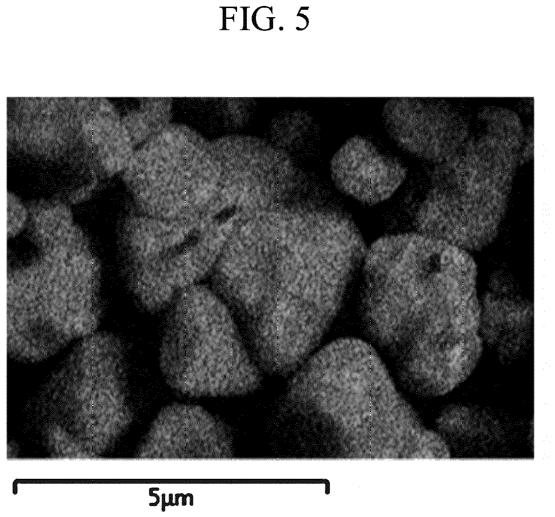

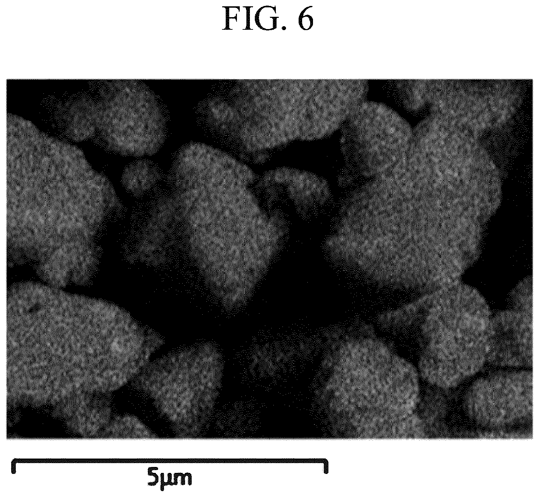

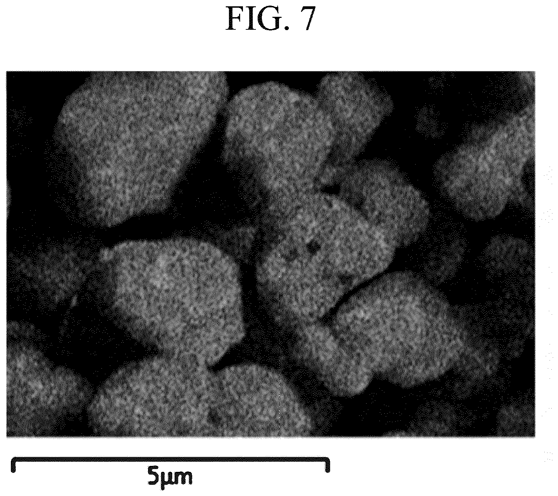

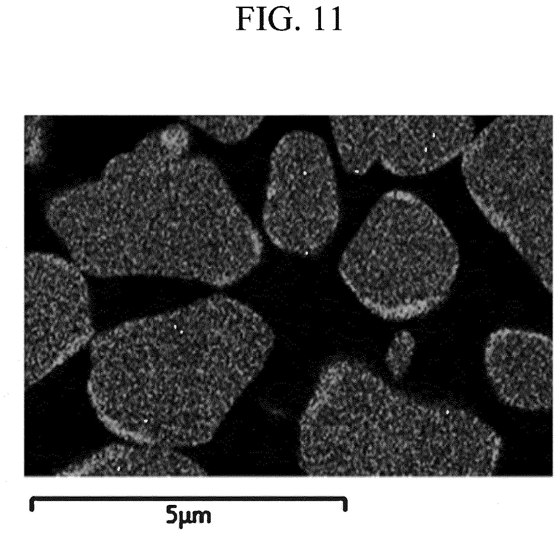

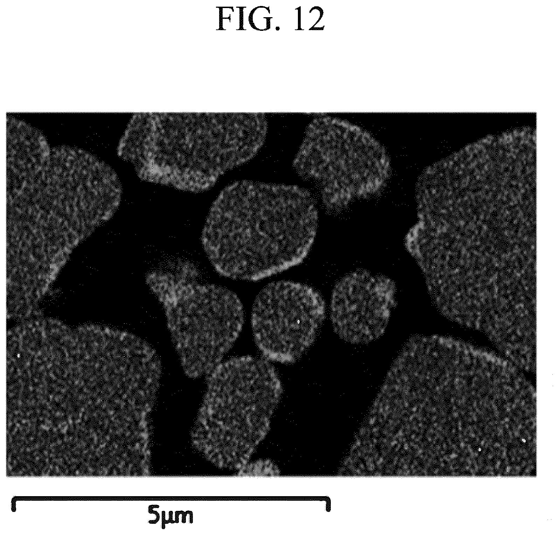

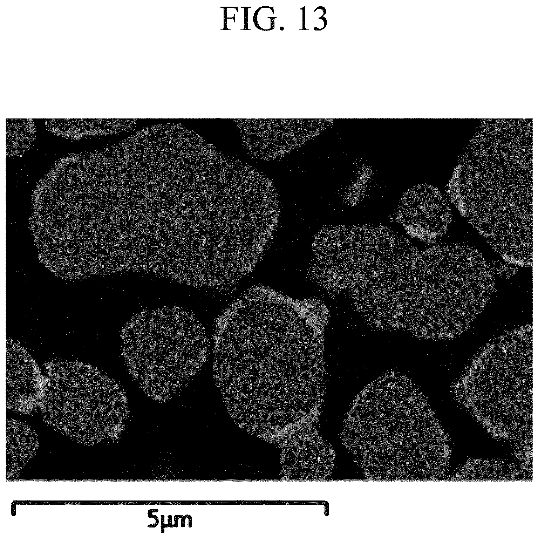

FIGS. 5 to 7 shows SEM-EDS analysis images of the second positive active material according to Comparative Example 1, in which cobalt elements are highlighted with light blue. In addition, FIGS. 11 to 13 are SEM-EDS analysis images of the fracture surface of the second positive active material according to Comparative Example 1, in which similarly, cobalt elements are highlighted with light blue.

Referring to FIGS. 5 to 7 and FIGS. 11 to 13, in the second positive active material of Comparative Example 1, the cobalt elements are uniformly distributed on the single particle surfaces.

### Evaluation Example 2: Analysis of Cobalt Content on the Surface of Single Particles

The second positive active materials of Example 1 and Comparative Example 1 were SEM-EDS analyzed with respect to each surface to measure a cobalt content based on the total amount of nickel and cobalt.

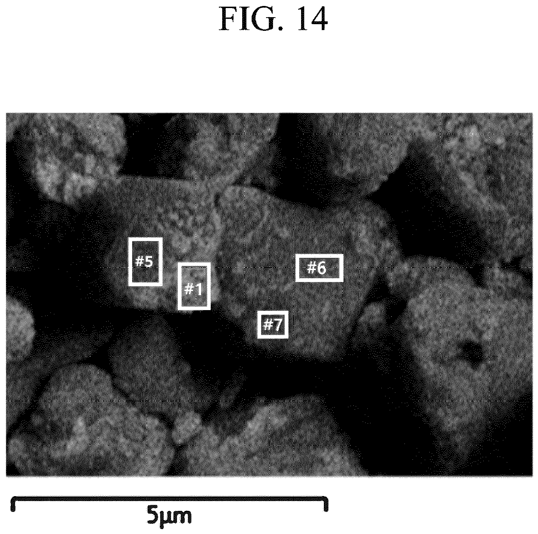

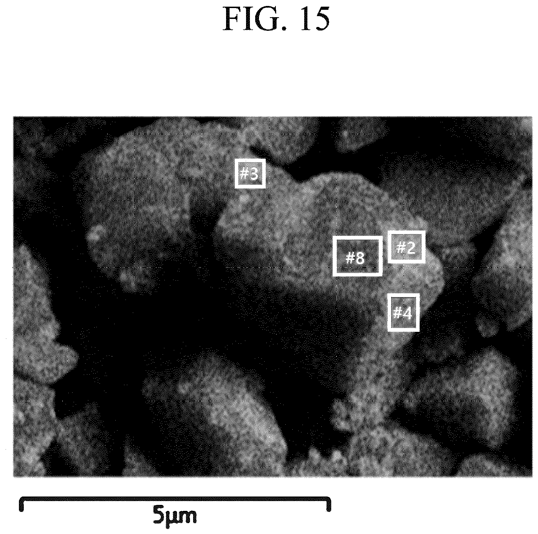

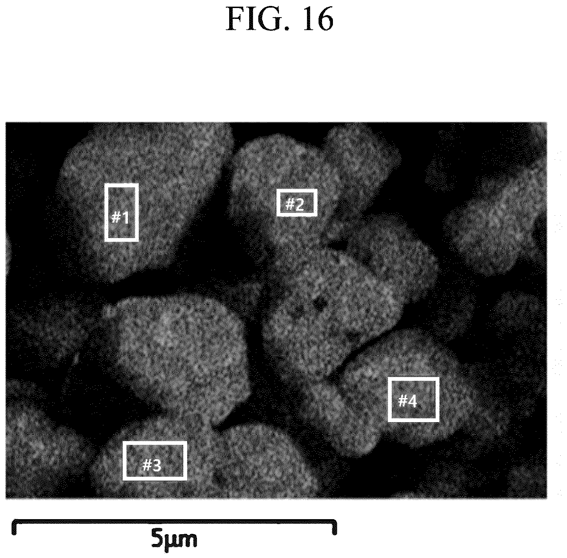

FIGS. 14 and 15 are SEM-EDS analysis images of the second positive active material of Example 1, and FIG. 16 is an SEM-EDS analysis image of the second positive active material of Comparative Example 1, wherein a cobalt content is measured at each number position, and the results are shown in Table 1.

**(Table 1)**

| | Position | Co/(Ni+Co) (at%) | Remarks |
|---|---|---|---|
| Example 1 | #1 | 57.8 | high-concentration coating region |
| | #2 | 60.2 | |
| | #3 | 40.7 | |
| | #4 | 52.9 | |
| | #5 | 17.5 | low-concentration coating region |
| | #6 | 16.0 | |
| | #7 | 20.4 | |
| | #8 | 19.4 | |

**(Table 2)**

| | Position | Co/(Ni+Co) (at%) |
|---|---|---|
| Comparative Example 1 | #1 | 8.9 |
| | #2 | 15.5 |
| | #3 | 12.0 |
| | #4 | 8.6 |

As shown in Table 1, the second positive active material of Example 1 is distinguished into a high-concentration coating region having a cobalt content of greater than or equal to 30 at% and a low-concentration coating region having a cobalt content of less than or equal to about 25 at%. The cobalt content of the high-concentration coating region has an arithmetic mean of 52.9 at%, and the cobalt content of the low-concentration coating region has an arithmetic mean of 18.3 at%, of which a difference is 34.6 at%. On the contrary, as shown in Table 2, the second positive active material of Comparative Example 1 exhibits a similar cobalt content of less than or equal to 15.5 at% on all the surfaces of the single particles and thus no distinction of the high and low concentration regions.

### Evaluation Example 3: Analysis of Difference in Cobalt Content between Surface and Inside of Single Particles

The second positive active materials of Example 1 and Comparative Example 1 were SEM-EDS analyzed on the surfaces to measure each cobalt content based on the total amount of nickel and cobalt. In addition, the second positive active materials of Example 1 and Comparative Example 1 were SEM-EDS analyzed with respect to the fracture surfaces to measure each cobalt content based on the total amount of nickel and cobalt inside the single particles. A difference of a cobalt content on the surface and a cobalt content inside the single particle was calculated, and the results are shown in Table 3. Herein, the cobalt contents on the surface and inside the single particle are an average value, wherein each cobalt content at 5 to 10 locations was measured and averaged.

**(Table 3)**

| | Surface (at%) | Inside (at%) | Difference between surface and inside (at%) |
|---|---|---|---|
| Example 1 | 35.61 | 6 | 29.61 |
| Comparative Example 1 | 11.25 | 6 | 5.25 |

Referring to Table 3, the second positive active material of Example 1 has a cobalt content of 35.61 at% on the surface, which is in a range of about 25 to 40 at%, but the second positive active material of Comparative Example 1 has a cobalt content of 11.25 at% on the surface, which is in a range of about 10 to 20 at%. Accordingly, there is a large difference in the cobalt contents coated on the surface of the second positive active materials according to a coating method. In addition, comparing a difference of the cobalt contents on the single particle surface and inside the single particle, Example 1 exhibits 29.61 at%, while Comparative Example 1 exhibits 5.25 at%. Example 1 exhibits a larger difference in the cobalt contents on the single particle surface and inside the single particle than Comparative Example 1. The second positive active material exhibiting these characteristics increases efficiency as well as realizes high-capacity.

### Evaluation Example 4: Charging/discharging Efficiency and Cycle-life Characteristics

Each coin half-cell of Example 1 and Comparative Example 1 was charged at a constant current (0.2 C) and a constant voltage (4.25 V, cut-off at 0.05 C) and then, measured with respect to charge capacity, paused for 10 minutes, and discharged to 3.0 V at a constant current (0.2 C) and then, measured with respect to discharge capacity. A ratio the discharge capacity relative to the charge capacity is shown as efficiency. The results are shown in Table 4.

In addition, the cells were initially charged and discharged and then, 50 times charged and discharged at 1 C at 45 °C to measure the 50^{th} discharge capacity, and a ratio (%) of the 50^{th} discharge capacity relative to the initial discharge capacity is expressed as capacity retention, that is, cycle-life characteristics in Table 4.

**(Table 4)**

| | Charge capacity (mAh/g) | Discharge capacity (mAh/g) | Efficiency (%) | 50 cycle capacity retention (%, 45 °C) |
|---|---|---|---|---|
| Example 1 | 237.9 | 209.4 | 88.0 | 97.1 |
| Comparative Example 1 | 237.0 | 208.3 | 87.9 | 93.8 |

Referring to Table 4, Example 1, compared with Comparative Example 1, exhibits increased discharge capacity and improved charge and discharge efficiency and in addition, improved high temperature cycle-life characteristics.

While this invention has been described in connection with what is presently considered to be practical example embodiments, it is to be understood that the invention is not limited to the disclosed embodiments. On the contrary, it is intended to cover various modifications and equivalent arrangements included within the scope of the appended claims.

### <Description of Symbols>

| | | | |
|---|---|---|---|
| 100: | rechargeable lithium battery | 112: | negative electrode |
| 113: | separator | 114: | positive electrode |
| 120: | battery case | 140: | sealing member |

## Claims

1. A positive active material for a rechargeable lithium battery, comprising
a first positive active material including a lithium nickel-based composite oxide and including secondary particles in which a plurality of primary particles are aggregated and a cobalt coating portion on a surface of the secondary particles, and
a second positive active material including a lithium nickel-based composite oxide and including single particles and a cobalt coating portion on a surface of the single particles,
wherein on the surface of the single particles of the second positive active material, there are a high-concentration coating region having a cobalt content of greater than or equal to about 30 at% and a low-concentration coating region having a cobalt content of less than or equal to about 25 at% based on the total amount of nickel and cobalt, and
a difference between a cobalt content based on the total amount of nickel and cobalt in the high-concentration coating region and a cobalt content based on the total amount of nickel and cobalt in the low-concentration coating region is about 20 at% to about 50 at%.

2. The positive active material of claim 1, wherein
the cobalt content based on the total amount of nickel and cobalt inside the single particle of the second positive active material is about 0 at% to about 15 at%.

3. The positive active material of claim 1 or claim 2, wherein
an average value of the cobalt content based on the total amount of nickel and cobalt on the surface of the single particle of the second positive active material is about 20 at% to about 60 at%.

4. The positive active material of any one of claims 1 to 3, wherein
a difference between the average value of the cobalt content based on the total amount of nickel and cobalt on the surface of the single particle and the cobalt content based on the total amount of nickel and cobalt inside the single particle is about 10 at% to about 60 at%.

5. The positive active material of any one of claims 1 to 4, wherein
the lithium nickel-based composite oxide of the second positive active material is represented by Chemical Formula 11:
[Chemical Formula 11] Liₐ₁₁Niₓ₁₁Co_{y11}M¹¹_{1-x11-y11}O₂
wherein, in Chemical Formula 11, 0.9≤a11≤1.8, 0.6≤x11≤1, and 0≤y11≤0.15, and M¹¹ is at least one element selected from Al, B, Ba, Ca, Ce, Cr, Cu, F, Fe, Mg, Mn, Mo, Nb, P, S, Si, Sr, Ti, V, W, and Zr, optionally wherein
in Chemical Formula 11, 0.9≤x11≤1, and 0≤y11≤0.1.

6. The positive active material of any one of claims 1 to 5, wherein:
(i) an average particle diameter of the first positive active material is about 7 µm to about 25 µm, and
an average particle diameter of the second positive active material is 1 µm to about 7 µm; and/or
(ii) the first positive active material is included in an amount of about 50 wt% to about 90 wt% and the second positive active material is included in an amount of about 10 wt% to about 50 wt% based on the total amount of the first positive active material and the second positive active material.

7. The positive active material of any one of claims 1 to 6, wherein
the lithium nickel-based composite oxide of the first positive active material is represented by Chemical Formula 1:
[Chemical Formula 1] Liₐ₁Niₓ₁M¹_{y1}M²_{1-x1-y1}O₂
wherein, in Chemical Formula 1, 0.9≤a1≤1.8, 0.3≤x1≤1, 0≤y1≤0.7, and M¹ and M² are each independently at least one element selected from Al, B, Ba, Ca, Ce, Co, Cr, Cu, F, Fe, Mg, Mn, Mo, Nb, P, S, Si, Sr, Ti, V, W, and Zr.

8. A method of preparing a positive active material for a rechargeable lithium battery, comprising
mixing a first nickel-based hydroxide and a lithium raw material and performing first heat-treatment to prepare a first nickel-based oxide in a form of secondary particles in which a plurality of primary particles are aggregated;
mixing a second nickel-based hydroxide and a lithium raw material and performing a second heat treatment to prepare a second nickel-based oxide in a form of single particles; and
mixing the first nickel-based oxide, the second nickel-based oxide, and a cobalt raw material and performing a third heat treatment
to obtain the positive active material of claim 1.

9. The method of claim 8, wherein
the first nickel-based hydroxide is represented by Chemical Formula 21, and
the second nickel-based hydroxide is represented by Chemical Formula 31:
[Chemical Formula 21] Niₓ₂₁M²¹_{y21}M²²_{1-x21-y21}(OH)₂
wherein, in Chemical Formula 21, 0.3≤x21≤1, 0≤y21≤0.7, and M²¹ and M²² are each independently at least one element selected from Al, B, Ba, Ca, Ce, Co, Cr, Cu, F, Fe, Mg, Mn, Mo, Nb, P, S, Si, Sr, Ti, V, W, and Zr,
[Chemical Formula 31] Niₓ₃₁CO_{y31}M³¹_{1-x31-y31}(OH)₂
wherein, in Chemical Formula 31, 0.6≤x31≤1, and 0≤y31≤0.15, and M³¹ is at least one element selected from Al, B, Ba, Ca, Ce, Cr, Cu, F, Fe, Mg, Mn, Mo, Nb, P, S, Si, Sr, Ti, V, W, and Zr.

10. The method of claim 8 or claim 9, wherein:
(i) the first heat-treatment is performed at a temperature range of about 600 °C to about 900 °C for about 5 hours to about 20 hours; and/or
(ii) the second heat-treatment is performed at a temperature range of about 800 °C to about 1100 °C for about 5 hours to about 20 hours.

11. The method of any one of claims 8 to 10, wherein:
(i) in the preparing of the second nickel-based oxide, a product obtained by the second heat treatment is pulverized to obtain the second nickel-based oxide in a form of single particles; and/or
(ii) in the mixing of the first nickel-based oxide and the second nickel-based oxide, the first nickel-based oxide and the second nickel-based oxide are mixed in a weight ratio of about 9:1 to about 5:5.

12. The method of any one of claims 8 to 11, wherein
in the mixing of the first nickel-based oxide, the second nickel-based oxide, and the cobalt raw material, when a total content of metals other than lithium in the first nickel-based oxide and the second nickel-based oxide is 100 parts by mole, they are mixed so that the cobalt contained in the cobalt raw material is about 0.01 parts by mole to about 7 parts by mole.

13. The method of any one of claims 8 to 12, wherein
in the mixing of the first nickel-based oxide, the second nickel-based oxide, and the cobalt raw material, the lithium raw material is mixed together, optionally wherein:
the lithium raw material is mixed in an amount of 1 part by mole to 4 parts by mole based on 1 part by mole of the cobalt raw material.

14. The method of any one of claims 8 to 13, wherein
the third heat treatment is performed at a temperature range of 650 °C to 900 °C for about 5 hours to about 30 hours.

15. A rechargeable lithium battery comprising a positive electrode including the positive active material of any one of claims 1 to 7, a negative electrode, and an electrolyte.
